# FASCICULE DE BREVET EUROPEEN

(11) **EP 1 264 655 B1**
(45) Date de publication et mention de la délivrance du brevet: **11.02.2004**
(21) Numéro de dépôt: 01201539.2
(22) Date de dépôt: 26.04.2001
(51) Int. Cl.: B23K 7/00, B23K 37/04, B22D 11/126, B23Q 7/00

(54) **Méthode et dispositif pour l'oxycoupage de brames**
Verfahren und Vorrichtung zum Brennschneiden von Brammen
Method and device for oxycutting of slabs

(43) Date de publication de la demande: 11.12.2002
(73) Titulaire: Eon Holding SA, 2450 Luxembourg (LU); EDW.C. Levy CO, Dearborn, Michigan 48120 (US)
(72) Inventeur: Wright, Ken, Dearborn, Michigan 48120 (US); Donze, Bertrand, 55100 Dugny (FR); Rozot, Thierry, 54115 Thorey Lyautey (FR); Donze, Pascal, 54000 Nancy (FR); Donze, Valérie, 54520 Laxou (FR)
(74) Mandataire: Waxweiler, Jean

(56) Documents cités:
- FR-A- 2 746 686
- GB-A- 1 355 457
- US-A- 2 426 690
- US-A- 3 200 456
- US-A- 4 598 761
- US-A- 4 708 581

## Description

L'invention concerne un procédé d'oxycoupage d'une brame parallélépipède dans une position verticale, selon lequel un mouvement relatif en direction verticale est causé entre un ou plusieurs chalumeaux d'oxycoupage et ladite brame (2) pour couper la brame lors de son passage devant le chalumeau d'oxycoupage préalablement mis en marche, (voir, par example, US-A-2 426 690), et des dispositifs pour sa mise en oeuvre conformément aux préambules des revendications 8 et 9 (voir, par example, US-A-2 426 690).

Divers de ces procédés sont connus dans l'art, comme par exemple celui décrit dans la demande de brevet française numéro de publication 2 746 686. Dans ce procédé la brame est placée sur chant sur une série de rouleaux entraînés pour laisser défiler la brame devant un chalumeau d'oxycoupage entre des paires de rouleaux verticaux montés fous.

Dans la demande de brevet européen numéro 00202767.0 du 4 août 2000, un procédé d'oxycoupage de brames et un dispositif pour sa mise en oeuvre sont décrits. Les brames sont refendues ou débitées en position horizontale ou sur chant, suspendus par des électro-aimants au-dessous de rouleaux d'entraînement.

Les procédés et systèmes ne conviennent pas pour le traitement debout de brames dont la longueur peut atteindre jusqu'à 14 mètres.

Le document US-A-2 426 690 concerne un dispositif de rainurage profond ou de coupe de métal au moyen d'un chalumeau, utilisant un chalumeau oscillant dans un plan vertical autour d'un axe horizontale à l'extrémité opposée à son extrémité libre et pouvant être déplacer linéairement de haut en bas dans ledit plan vertical pour faire une rainure rectiligne plus au moins profone ou couper du métal d'une épaisseur correspondante. Aucune indication n'est faite quant au maintien du métal et des moyens utilisés à cet effet.

Le document GB-A-1 355 457 concerne un dispositif de levage a aiment(s) pour la manipulation d'objets ferromagnétiques, y compris des brames. Toutefois aucune indication y est faite pour l'oxycoupage et les moyens pour manipuler une brame pendant l'oxycoupage.

Le but de l'invention est de fournir un procédé d'oxycoupage de brames debout et un dispositif pour sa mise en oeuvre.

Ce but est réalisé selon l'invention par les procédés d'oxycoupage selon les revendications indépendantes 1 et 4. Des modes de réalisations sont décrits dans les revendications qui en dépendent. Des dispositifs de mise en oeuvre de ces procédés sont décrits aux revendications 7 et 8.

Un procédé selon un mode de réalisation de l'invention est caractérisé en ce qu'une brame couchée à plat est soulevée à l'aide d'un moyen de levage comprenant un ou plusieurs électro-aimant(s) qui, pour lever la brame, est (sont) placé(s) en contact avec le côté de la brame éloigné du et opposé au chalumeau d'oxycoupage, que l'électro-aimant est soumis à un mouvement combiné vertical et transversal perpendiculaire au plan de ladite position verticale, pour amener le plan principal de la brame dans ladite position verticale, que l'électro-aimant avec la brame suspendue sont abaissés en direction verticale, après la mise en marche du chalumeau avant le passage du bord inférieur de la brame devant le chalumeau d'oxycoupage, jusqu'à ce que le bord inférieur de la brame se pose dans un dispositif de maintien de brame, et qu'ensuite ledit chalumeau d'oxycoupage est déplacé verticalement vers le haut le long de la brame pour couper celle-ci pendant que la brame est maintenue dans cette position verticale, à l'aide de l'électroaimant

Un procédé selon un autre mode de réalisation est caractérisé en ce que une table porte-brame est basculée autour de son bord proche du ou des chalumeaux avec son plan principal contre un plan vertical dans ladite position verticale et que la brame est maintenue dans cette position verticale, à l'aide dudit moyen de levage, et que ledit chalumeau est mis en marche et déplacé verticalement de haut en bas ou de bas en haut le long de la brame sur une distance plus longue que la brame.

Le dispositif pour la mise en oeuvre du procédé d'oxycoupage selon un mode de réalisation est caractérisé par au moins un chalumeau d'oxycoupage, un moyen comprenant un ou plusieurs électro-aimant (s) suspendu(s) mobile en direction verticale et transversale par rapport audit plan principal vertical pour soulever une brame et la placer devant ledit chalumeau avec son plan principal en position vertical et maintenir la brame dans cette position pendant l'opération de coupage, un moyen destiné à recevoir le bord inférieur de la brame, quand la brame se trouve en position verticale debout ou sur chant, et un moyen pour déplacer ledit chalumeau en direction vertical de bas en haut ou de haut en bas le long du plan principal de la brame dans la position verticale.

Le dispositif pour la mise en oeuvre du procédé d'oxycoupage selon l'autre mode de réalisation est caractérisé par au moins un chalumeau d'oxycoupage, un moyen comprenant une table porte-brame pouvant basculer entre une position horizontale de repos et une position de travail perpendiculaire par rapport à la position de repos, pour soulever une brame et la placer devant ledit chalumeau avec son plan principal en position verticale et maintenir la brame dans cette position pendant l'opération de coupage, au moins une tour de support de brame droite verticale à ladite position de repos, la brame soulevée avec son plan principal en position verticale étant coincée entre la table porte-brame dans sa position de travail et la tour droite, et un moyen pour déplacer ledit chalumeau en direction verticale de bas en haut ou de haut en bas le long du plan principal de la brame dans la position verticale. Selon un mode de réalisation avantageux ce dispositif selon l'invention peut comprendre en outre au moins un vérin hydraulique articulé à une extrémité au sol et à l'autre extrémité a une extrémité ladite table pour basculer ladite table de sa position horizontale autour de l'extrémité opposée de ladite table dans sa position de travail vertical.

D'autres modes de réalisation sont décrits dans les revendications dépendantes.

L'invention sera maintenant décrite à titre d'exemple avec référence à des modes de réalisation préférés de l'invention représentés dans les dessins annexés, dans lesquels:
La Fig. 1 est une représentation schématique d'un mode de réalisation de l'invention, et
la fig. 2 est une représentation d'un second mode de réalisation de l'invention.

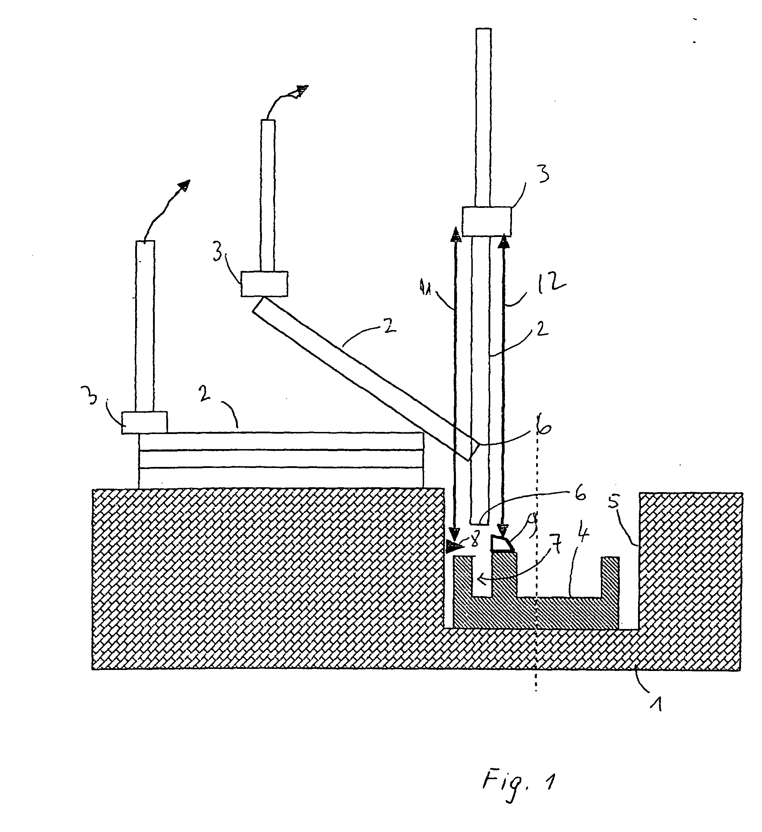

La figure 1 représente de façon schématique un mode de réalisation préféré du dispositif d'oxycoupage de brames selon l'invention. Sur la fondation 1 on trouve à gauche une pile de brames 2 à refendre ou à débiter. Pour refendre, la brame 2 est mise verticalement debout, pour débiter elle est mise sur chant. La brame 2 est soulevée à l'aide d'un ou de plusieurs électro-aimants 3 suspendus, p.ex. à l'aide d'une élingue à un portique ou semi-portique ou autre dispositif de levage approprié. Ainsi, l'électro-aimant est mobile verticalement vers le haut ou le bas, et horizontalement en direction transversale à la brame 2, vers la gauche et vers la droite. Au fond d'une fosse 5 on trouve un moyen étau 4 destiné à revoir l'extrémité 6 inférieure de la brame 2 à refendre.

Pour refendre une brame 2, celle-ci est saisie à l'aide de l'électro-aimant 3 alimenté sur le bord de la brame éloignée de la fosse 5 et l'électro-aimant et soulevé et la brame 2 se lève. L'électro-aimant 2 est déplacé latéralement vers la droite. Plus l'électro-aimant 2 est levé et déplacé vers la droite, la brame 2 bascule autour du bord opposé jusqu'à venir finalement avec son plan principal dans la verticale au-dessous du moyen étau 4. Arrivée au-dessus de la prise de fer 7 de maintien vertical (p.ex. d'un étau mû par vérin), la brame 2 peut être descendue. Mais avant la brûlure d'oxycoupage 8 et l'ébavureur 9 situé sur la partie supérieure de l'étau, de part et d'autre de la prise de fer 7 sont mis en marche. La brame 2 est descendue dans la prise de fer 7 jusqu'à ce que le bout inférieur 6 touche le fond de la prise de fer 7. Le refendage de la brame 2 a commencée depuis que sont bord inférieur est passé devant le brûleur d'oxycoupage 8 et est continuée maintenant en déplaçant le brûleur d'oxycoupage 8 et l'ébavureur 9 ensemble vers le haut, tel qu'indiqué par les doubles flèches 11 et 12, respectivement. Arrivé en haut de la brame 2, celle-ci est complètement refendue en deux ou plusieurs brames de moindre largeur suivant le nombre de brûleurs/ébavureurs 8/9 utilisés.

Le brûleur/ébavureur 8/9 est descendu dans la fosse 4 et les brames refendues sont retirées du moyen étau pour faire place à une nouvelle brame 2 à refendre.

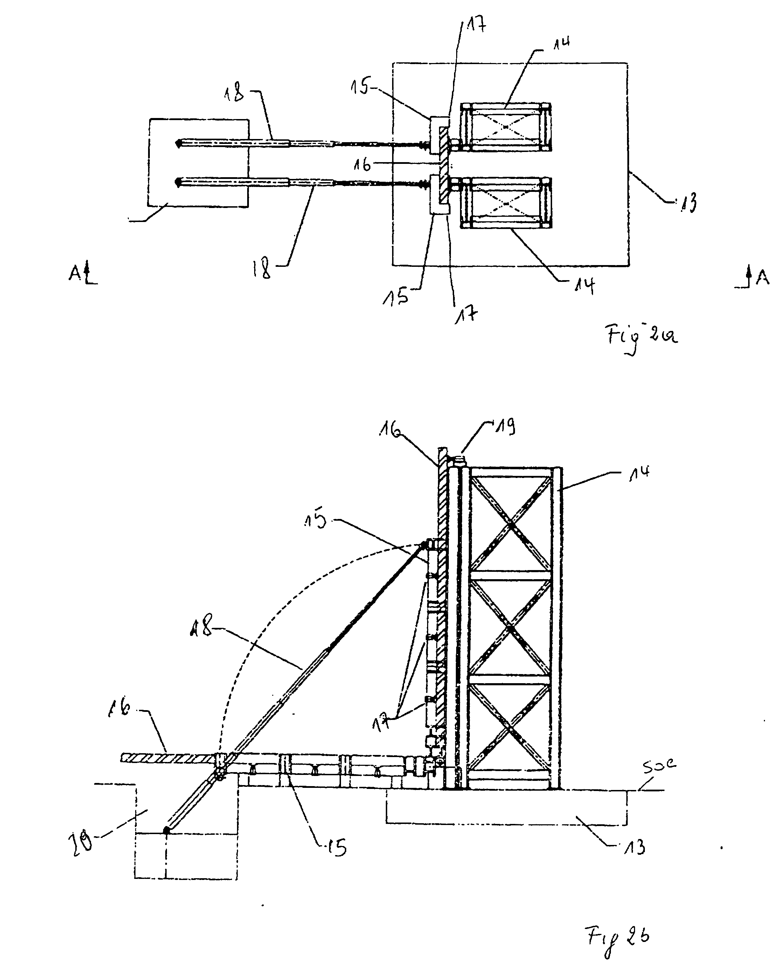

Un second mode de réalisation est montré à la figure 2a, b en projection horizontale et vue de face. Ce mode de réalisation correspond sur une fondation 13 au moins une tour de support de brame 14, de préférence au moins deux, suivant la largeur des brames à refendre. Il est aussi possible de prévoir plus que deux tours. La hauteur totale des tours est en fonction de la longueur des brames qui peut être de 14 mètres.

La tour de support de brame 14 présente sur sa partie gauche dans la figure 2 une face plane, perpendiculaire à l'horizontale qui servira d'appui à la brame à refendre debout.

A gauche de la tour à la figure 2 se trouve une table porte-brame 15 d'extensions horizontales appropriées à son usage, qui est représentée à la figure 2b en position de travail verticale et en position de repos horizontale. La table 15 peut être basculée autour de son bord proche de la tour 14 pour basculer une brame 16 horizontale dans une position verticale contre la tour 14 pour être refendue. Une articulation appropriée à cet usage est prévue. La table porte-brame 15 peut être pourvue à chacun de ses côtés latéraux longitudinaux d'un bord 17 replié vers le haut en position horizontale pour empêcher la brame 16 à s'échapper de la table porte-brame 15 lors de son transfert de la position de repos horizontale dans la position de travail verticale debout.

Des moyens de contrôle de la pression 17 sont prévus en direction longitudinale et latérale dans le volume de la table porte-brame 15 pour exercer une pression appropriée sur toute la surface de la brame 16 en position debout verticale et presser la brame 16 uniformément contre la surface plane, verticale, gauche de la tour de support de brame 14. Des bras de poussée horizontale 19 sont prévus à l'extrémité supérieure de la tour 14 pour agir en direction horizontale et ajuster dans la verticale le bout supérieure de la brame 16 dépassant la table porte-brame 15.

Au moins un vérin hydraulique 18, de préférence deux, est prévu pour basculer la table porte-brame 14 dans sa position de travail verticale. Le vérin est articulée à une de ses extrémités au sol et à l'autre de ses extrémités au bord gauche de la table porte-brame 15. Par l'actionnement du vérin hydraulique 18, celui-ci s'étend ou se contracte et la table porte-brame 15 est basculée de sa position horizontale de repos dans sa position verticale de travail et vice-versa. L'extrémité du vérin 18 articule au sol peut-être abaissée dans une fosse 20.

Un brûleur d'oxycoupage (non représenté) et un système ébavureur (non représenté) opposé en ligne sont montés de sorte que lors de refendage de la brame 14, ils se trouvent de part et d'autre du plan principal de la brame 14, et donc de la prise de fer 7, et peuvent se déplacer en direction verticale de haut en bas et vice-versa, p.ex. entre les deux tours 14, ou à côté de la tour 14 en cas de tour 14 unique. En cas de deux tours 14, la table porte-brame 15 est pourvue d'un espace libre longitudinal médiane pour laisser passer le brûleur d'oxycoupage ou l'ébavureur suivant le côté de la prise e fer qu'ils se trouvent.

## Revendications

1. Procédé d'oxycoupage d'une brame parallélépipède dans une position verticale, selon lequel un mouvement relatif en direction verticale est causé entre un ou plusieurs chalumeaux d'oxycoupage et ladite brame (2) pour couper la brame lors de son passage devant le chalumeau d'oxycoupage préalablement mis en marche, **caractérisé en ce qu'**une brame couchée à plat (2) est soulevée à l'aide d'un moyen de levage comprenant un ou plusieurs électro-aimant (s) (3) qui, pour lever la brame (2), est (sont) placé (s) en contact avec le côté de la brame éloigné du et opposé au chalumeau d'oxycoupage, que l'électro-aimant (3) est soumis à un mouvement combiné vertical et transversal perpendiculaire au plan de ladite position verticale, pour amener le plan principal de la brame (2) dans ladite position verticale, que l'électro-aimant (3) avec la brame (2) suspendue sont abaissés en direction verticale, après la mise en marche du chalumeau avant le passage du bord inférieur de la brame (2) devant le chalumeau d'oxycoupage (8), jusqu'à ce que le bord inférieur de la brame (2) se pose dans un dispositif de maintien de brame (4,7), et qu'ensuite ledit chalumeau d'oxycoupage (8) est déplacé verticalement vers le haut le long de la brame (3) pour couper celle-ci pendant que la brame (2) est maintenue dans cette position verticale, à l'aide de l'électroaimant (3).

2. Procédé selon la revendication 1, **caractérisé en ce que** la brame (2) est posée verticalement sur chant.

3. Procédé selon la revendication 1, **caractérisé en ce que** la brame (2) est posée verticalement debout.

4. Procédé d'oxycoupage d'une brame parallélépipède dans une position verticale, selon lequel un mouvement relatif en direction verticale est causé entre un ou plusieurs chalumeaux d'oxycoupage et ladite brame (2) pour couper la brame lors de son passage devant le chalumeau d'oxycoupage préalablement mis en marche, **caractérisé en ce qu'**une brame couchée à plat (2) est soulevée à l'aide d'un moyen de levage comprenant une table porte-brame et basculée autour de son bord proche du ou des chalumeaux avec son plan principal contre un plan vertical dans ladite position verticale et que la brame (2) est maintenue dans cette position verticale, à l'aide dudit moyen de levage, et que ledit chalumeau est mis en marche et déplacé verticalement de haut en bas ou de bas en haut le long de la brame (2) sur une distance plus longue que la brame.

5. Procédé selon la revendication 4, **caractérisé en ce que** la brame (2) est placée debout.

6. Procédé selon la revendication 4, **caractérisé en ce que** la brame (2) est placée sur chant.

7. Dispositif pour la mise en oeuvre du procédé d'oxycoupage selon la revendication 1 comprenant au moins un chalumeau d'oxycoupage, un moyen pour déplacer ledit chalumeau en direction verticale de bas en haut ou de haut en bas le long du plan principal de la brame dans la position verticale, **caractérisé par** un moyen (3; 14, 15) comprenant un ou plusieurs électro-aimant(s) (3) suspendu(s) mobile en direction verticale et transversale par rapport audit plan principal vertical pour soulever une brame (2) et la placer devant ledit chalumeau avec son plan principal en position verticale et maintenir la brame (2) dans cette position pendant l'opération de coupage, un moyen (7) destiné à recevoir le bord inférieur de la brame (2), quand la brame se trouve en position verticale debout ou sur chant.

8. Dispositif pour la mise en oeuvre du procédé d'oxycoupage selon la revendication 4 comprenant au moins un chalumeau d'oxycoupage, un moyen pour déplacer ledit chalumeau en direction verticale de bas en haut ou de haut en bas le long du plan principal de la brame dans la position verticale, **caractérise par** un moyen (3; 14, 15) comprenant une table porte-brame (15) pouvant basculer entre une position horizontale de repos et une position de travail perpendiculaire par rapport à la position de repos, pour soulever une brame (2) et la placer devant ledit chalumeau avec son plan principal en position verticale et maintenir la brame (2) dans cette position pendant l'opération de coupage, au moins une tour de support de brame (14) droite verticale à ladite position de repos, la brame (2) soulevée avec son plan principal en position verticale étant coincée entre la table porte-brame (15) dans sa position de travail et la tour droite (14).

9. Dispositif selon la revendication 8, **caractérisé par** au moins un vérin hydraulique (17) articulé à une extrémité au sol et à l'autre extrémité à une extrémité ladite table (15) pour basculer ladite table porte-brame (15) de sa position horizontale autour de l'extrémité opposée de ladite table dans sa position de travail verticale.

## Patentansprüche

1. Brennschneideverfahren für senkrecht stehende parallelippipedförmige Brammen, bei dem eine senkrechte Relativbewegung in senkrechter Richtung zwischen einem oder mehreren Schneidbrennern und der Bramme (2) zum Schneiden der Bramme bei ihrem Durchgang vor dem vorher in Gang gesetzten Brenner hervorgerufen wird, **dadurch gekennzeichnet, dass** eine flach liegende Bramme (2) mit Hilfe eines aus einem oder mehreren Elektromagneten (3) bestehenden Hebemittels gehoben wird, welche(r) zum Heben der Bramme mit der vom Brennschneider entfernten und entgegengesetzten Seite der Bramme in Berührung gebracht wird (werden), der Elektromagnet (3) einer senkrechten und transversalen Kombinationsbewegung senkrecht zur Ebene der senkrechten Stellung ausgesetzt wird, um die Hauptebene der Bramme (2) in die senkrechte Stellung zu bringen, dass der Elektromagnet (3) mit der aufgehängten Bramme (2) in senkrechter Richtung nach dem Anschalten des Schneidbrenners abgesenkt werden bis die untere Kante der Bramme (2) in einer Brammenhaltevorrichtung (4,7) sitzt und, dass dann der Schneidbrenner (2) senkrecht nach oben entlang der Bramme (2) bewegt wird, um diese während sie in der senkrechten Stellung vom Elektromagneten (3) gehalten wird, zu schneiden.

2. Verfahren nach Anspruch 1, wobei die Bramme senkrecht auf einer Kante steht.

3. Verfahren nach Anspruch 1, wobei die Bramme hochkantig steht.

4. Brennschneideverfahren für senkrecht stehende parallelipipedförmige Brammen, bei dem eine senkrechte Relativbewegung in senkrechter Richtung zwischen einem oder mehreren Schneidbrennern und der Bramme (2) zum Schneiden der Bramme bei ihrem Durchgang vor dem vorher in Gang gesetzten Brenner hervorgerufen wird, **dadurch gekennzeichnet, dass** eine flach liegende Bramme (2) mit Hilfe eines aus einem Brammentisch bestehenden Hebemittels gehoben und um seine dem oder den Schneidbrenner(n) am nächsten gelegene Kante mit seiner Hauptebene gegen eine Ebene in der senkrechten Stellung gedreht wird und die Bramme in dieser senkrechten Lage mit dem Hebemittel gehalten wird; und der Schneidbrenner eingeschaltet und senkrecht von oben nach unten oder von unten nach oben entlang der Bramme (2) über eine größere Länge wie die Bramme bewegt wird.

5. Verfahren nach Anspruch 4, wobei die Bramme hochkantig steht.

6. Verfahren nach Anspruch 4, wobei die Bramme senkrecht auf Kante steht.

7. Vorrichtung zur Durchführung des Brennschneideverfahrens nach Anspruch 1, mit mindestens einem Schneidbrenner, einer Einrichtung um den Schneidbrenner in senkrechter Richtung von unten nach oben oder von oben nach unten entlang der Hauptebene der Bramme in senkrechter Stellung zu bewegen, **gekennzeichnet durch** eine Einrichtung (3;14,15) mit einem oder mehreren in senkrechter und transversaler Richtung zur Hauptebene mobil aufgehängten Elektromagneten (3), um eine Bramme (2) senkrecht aufzuheben und sie mit ihrer Hauptebene vor den Schneidbrenner in senkrechter Lage zu stellen und die Bramme (2) in dieser Lage, während des Brennschneidens zu halten, eine Einrichtung (7) zur Aufnahme der unteren Kante der Bramme (2), wenn die Bramme hochkantig oder auf Kante in senkrechter Stellung steht.

8. Vorrichtung zur Durchführung des Brennschneideverfahrens nach Anspruch 4, mit mindestens einem Schneidbrenner, einer Einrichtung um den Schneidbrenner in senkrechter Richtung von unten nach oben oder von oben nach unten entlang der Hauptebene der Bramme in senkrechter Stellung zu bewegen, **gekennzeichnet durch** eine Einrichtung (3;14,15) mit einem Brammentisch (15), welcher zwischen einer horizontalen Ruhestellung und einer Arbeitsstellung senkrecht zur Ruhestellung schwenkbar ist, um die Bramme (2) zu heben und sie vor dem Schneidbrenner mit ihrer Hauptebene in senkrechter Stellung zu stellen und die Bramme (2) in dieser Stellung während des Schneidevorgangs zu halten, mindestens einen geraden Brammenstützturm (14) senkrecht zur Ruhestellung, wobei die mit ihrer Hauptebene in die senkrechte Stellung gehobene Bramme (2) zwischen dem Brammentisch (15) und dem Brammenstützturm (14) in der Arbeitsstellung eingeklemmt ist.

9. Vorrichtung nach Anspruch 8, mit mindestens einem hydraulischen Stellantrieb (17), der an einem Ende am Boden und am anderen Ende an einem Ende des Tisches (15) angelenkt ist, um den Brammentisch (15) aus seiner horizontalen Stellung und das entgegengesetzte Ende des Tisches in seine senkrechte Arbeitsstellung zu schwenken.

## Claims

1. A flame-cutting process for a parallepiped slab in a vertical position, wherein relative vertical movement between one or more flame-cutting blowtorches and said slab (2) is caused to cut the slab as it passes before the previously activated flame-cutting blowtorch, **characterized in that** a slab (2) in a flat position is lifted into a vertical position using a lifting device comprising one or more electromagnets (3) which, for lifting the slab (2), are placed in contact with the side of the slab away from and opposite to the flame-cutting blowtorch and are moved both vertically and transversely perpendicular to the plane of said vertical position to bring the primary plane of the slab (2) into said vertical position, that the electromagnet (3) with the slab suspending therefrom are lowered vertically after the blowtorch is activated until the lower edge of slab (2) is in a slab-holding device (4,7), and that then said blowtorch (8) is moved vertically upwards along the slab to cut the slab, while it is held in said vertical position by means of the electromagnet (3).

2. The flame-cutting process according to claim 1, wherein the slab (2) is placed vertically on its edge.

3. The flame-cutting processing according to claim 1, wherein the slab (2) is placed standing vertically.

4. A flame-cutting process for a parallepiped slab in a vertical position, wherein relative vertical movement between one or more flame-cutting blowtorches and said slab (2) is caused to cut the slab as it passes before the previously activated flame-cutting blowtorch, **characterized in that** a slab (2) in a flat position is lifted into a vertical position using a lifting device comprising a table supporting the slab to tip the slab around its edge near the blowtorch or blowtorches with its primary plane against a vertical plane in said vertical position and to hold the slab in place in this vertical position, and that the blowtorch is activated and moved vertically upwards and downwards along the slab (2) over a distance longer than the slab.

5. The flame-cutting process according to claim 4, wherein the slab (2) is standing.

6. The flame-cutting process according to claim 4, wherein said slab (2) is placed vertically on its edge.

7. A device for implementation of the flame-cutting process according to claim 1, comprising at least one flame-cutting blowtorch, a means for moving said blowtorch vertically upwards or downwards along the primary plane of the slab in the vertical position, **characterized by** a lifting means (3;14,15) comprising one or several suspended electromagnets moveable vertically and transversally relative to said primary vertical plane of the slab to lift a slab and place the slab before said blowtorch with the primary plane of the slab in a vertical position and to hold the slab (2) in this position during cutting of the slab; a holding device (7) designed to receive the lower edge of slab (2) when the slab is in the vertical position, standing or on its edge.

8. A device for implementation of the flame-cutting process according to claim 4, comprising at least one flame-cutting blowtorch, a means for moving said blowtorch vertically upwards or downwards along the primary plane of the slab in the vertical position, **characterized by** a lifting means (3;14,15) comprising a slab-support table (15) moveable between a horizontal rest position and a working position perpendicular to the rest position to lift a slab (2) and place the slab before said blow torch with the primary plane of the slab in a vertical position and to hold the slab (2) in this position during cutting of the slab; at least one straight slab-support (14) vertical to said rest position; the slab (2) being lifted to a position in which its primary plane is in a vertical position and the slab is positioned between the slab-support table (15) in its work position and the slab-support post (14).

9. The device according to claim 8, including at least one hydraulic actuator (17) connected at one end to ground and at the other and to said slab-support table (15) and which is operable to move said slab-support table (15) from in its horizontal position about the opposite end of said table to its vertical work position.
